# EUROPÄISCHE PATENTSCHRIFT

(11) **EP 2 454 790 B1**
(45) Veröffentlichungstag und Bekanntmachung des Hinweises auf die Patenterteilung: **11.12.2013**
(21) Anmeldenummer: 10730439.6
(22) Anmeldetag: 02.07.2010
(51) Int. Cl.: H02H 11/00

(54) **ELEKTRONISCH KOMMUTIERTER ELEKTROMOTOR MIT EINEM VERPOL- UND ÜBERSPANNUNGSSCHUTZ UND VERFAHREN**
ELECTRONICALLY COMMUTATED ELECTRICAL MOTOR WITH PROTECTION AGAINST POWER SUPPLY REVERSAL AND OVER-VOLTAGE
MOTEUR ÉLECTRIQUE À COMMUTATION ÉLECTRONIQUE AVEC PROTECTION CONTRE L'INVERSION DE POLARITE ET CONTRE LA SURTENSION

(30) Priorität: 14.07.2009 DE 102009027665
(43) Veröffentlichungstag der Anmeldung: 23.05.2012
(73) Patentinhaber: Robert Bosch GmbH, 70442 Stuttgart (DE)
(72) Erfinder: KNECHT, Gerhard, 76473 Iffezheim (DE)
(86) Internationale Anmeldenummer: PCT/EP2010/059420
(87) Internationale Veröffentlichungsnummer: WO 2011/006772

(56) Entgegenhaltungen:
- WO-A1-2007/020419
- DE-A1- 4 209 167
- DE-A1- 10 208 981
- DE-A1- 10 232 716
- DE-A1-102006 029 364
- US-A- 4 710 685
- US-A- 5 517 379
- US-A1- 2004 150 927

## Beschreibung

### Stand der Technik

Die Erfindung betrifft einen Elektromotor, insbesondere einen elektronisch kommutierten Elektromotor. Der Elektromotor weist einen Stator und einen insbesondere permanentmagnetisch ausgebildeten Rotor auf. Der Elektromotor weist auch eine Leistungsendstufe auf, welche ausgangsseitig mit dem Stator verbunden ist. Der Elektromotor weist auch eine mit der Leistungsendstufe verbundene Steuereinheit auf. Die Steuereinheit ist ausgebildet, die Leistungsendstufe derart anzusteuern, dass der Stator ein magnetisches Drehfeld zum Drehbewegen des Rotors erzeugen kann.

Aus der DE 199 41 489 A1 ist eine Schutzschaltung für eine Reihenschaltung umfassend eine Leistungshalbleiter-Endstufe und einen induktiven Verbraucher bekannt, bei der ein Freilaufkreis vorgesehen ist, welcher eine Freilaufdiode und einen Verpolschutz-Halbleiterschalter aufweist, wobei der Verpolschutz-Halbleiterschalter über eine Ladungspumpe derart angesteuert wird, dass bei einem verpolten Anliegen einer Versorgungsspannung der Verpolschutz-Halbleiterschalter in einen nichtleitenden Zustand schaltet, so dass dieser einen ungewollten Stromfluss über die Freilaufdiode verhindern kann. Weiter ist die Schutzschaltung ausgebildet, bei einem Überschreiten eines vorgegebenen Spannungswertes, der ein Nicht-Funktionieren des Freilaufkreises zur Folge hat, ein digitales Abschalt-Signal für eine Pulsweiten-Modulations-Steuerung der Schutzschaltung zu erzeugen.

Aus der DE 41 37 452 A1 ist eine Verpolschutz-Anordnung für Leistungsendstufen-Feldeffekt-Transistoren bekannt, wobei ein zu den Leistungsendstufen-Feldeffekt-Transistoren invers gepolter weiterer Feldeffekttransistor als Verpolschutzelement vorgesehen ist.

Die US 2004 15 0927 zeigt einen Überspannungsschutz bei dem die Spannung zurecht geregelt wird, indem ein erstes Schaltelement eine Spannungsquelle vor einer Rückwärtsspannung und ein zweites Schaltelement die Spannungsquelle vor eine Überspannung schützt, dabei wird eine Ladungspumpe deaktiviert.

Die US 551 7379 zeigt eine Schaltung zum Schutz vor Verpolung von batteriebetriebenen Halbleiterschaltungen. Die Druckschrift lehrt das Kurzschließen des Gates und des Source eines MOSFETS durch ein selbstleitendes HalbleiterElement. Das führt zum Ausschalten und Trennen der Last von der Batterie.

### Offenbarung der Erfindung

Die erfindungsgemäße Vorrichtung wird im Anspruch 1 genau definiert. Vorteilhafte Ausgestaltungen sind Gegenstand der zugehörigen Unteransprüche.

Erfindungsgemäß weist der Elektromotor der eingangsgenannten Art eine Schutzeinheit auf, welche ausgebildet ist, in Abhängigkeit einer Falschpolung einer Versorgungsspannung des Elektromotors die Leistungsendstufe oder zusätzlich die Steuereinheit von der Versorgungsspannung zu trennen.

Durch die Schutzeinheit kann vorteilhaft die Leistungsendstufe des Elektromotors unabhängig von der Schutzeinheit verwirklicht sein. Weiter vorteilhaft kann die Schutzeinheit einem bestehenden Elektromotor beziehungsweise einer bestehenden Schaltungsanordnung eines Elektromotors hinzugefügt sein. Weiter vorteilhaft kann durch die Schutzeinheit nicht nur die Leistungsendstufe, sondern auch zusätzlich zur Leistungsendstufe die Steuereinheit oder eine Zwischenkreiskapazität von der Versorgungsspannung - im Falle einer Falschpolung - getrennt werden.

In einer bevorzugten Ausführungsform ist die Schutzeinheit ausgebildet, in Abhängigkeit einer Überspannung der Versorgungsspannung des Elektromotors die Leistungsendstufe oder zusätzlich die Steuereinheit von der Versorgungsspannung zu trennen. Durch diese Ausführungsform kann vorteilhaft die Leistungsendstufe - insbesondere ohne eine zusätzliche Modifikation - durch die Schutzeinheit vor Überspannungen geschützt werden.

In einer vorteilhaften Ausführungsform des Elektromotors weist der Elektromotor eine wenigstens zur Leistungsendstufe parallel geschaltete Zwischenkreiskapazität auf. Die Schutzeinheit ist in dieser Ausführungsform ausgebildet, eine an der Zwischenkreiskapazität anliegende Zwischenkreisspannung zu erfassen und die Zwischenkreiskapazität, oder zusätzlich die Leistungsendstufe, in Abhängigkeit von der Zwischenkreisspannung zu trennen.

Weiter bevorzugt ist die Steuereinheit angeordnet, in Abhängigkeit von der Überspannung und/oder der Fälschpolung mittels der Schutzeinheit von der Versorgungsspannung getrennt zu werden.

Die Schutzeinheit kann - insbesondere unabhängig von der vorab erwähnten Spannungsüberwachung einer Versorgungsspannung, insbesondere Bordnetzspannung eines Kraftfahrzeuges, ausgebildet und angeordnet sein, die Zwischenkreisspannung zu überwachen und in Abhängigkeit von einer Überspannung der Zwischenkreisspannung die Leistungsendstufe, die Steuereinheit, oder die Zwischenkreiskapazität, oder eine Kombination aus diesen von der Versorgungsspannung zu trennen.

Eine Überspannung der Versorgungsspannung oder der Zwischenkreisspannung ist beispielsweise ein Überschreiten eines vorbestimmten Spannungswertes der Versorgungsspannung beziehungsweise der Zwischenkreisspannung.

In einer vorteilhaften Ausführungsform ist die Schutzeinheit ausgebildet, die Zwischenkreiskapazität oder zusätzlich die Leistungsendstufe in Abhängigkeit von einem Absinken der Zwischenkreisspannung zu trennen. Durch diese Ausführungsformen kann vorteilhaft ein kurzgeschlossenes oder defektes Bauelement in dem Elektromotor detektiert werden. Das defekte Bauelement kann beispielsweise ein Transistor der Leistungsendstufe, oder die Zwischenkreiskapazität selbst sein. Durch diese Ausführungsform der Schutzeinheit kann vorteilhaft ein Brand in einem Kraftfahrzeug mit dem elektronisch kommutierten Elektromotor verhindert werden.

In einer bevorzugten Ausführungsformen ist die Zwischenkreiskapazität ein keramischer Kondensator. Dadurch kann vorteilhaft ein Bauvolumen des Elektromotors, insbesondere der Steuereinheit des Elektromotors klein gehalten sein. Weiter vorteilhaft kann die Zwischenkreiskapazität als keramischer Kondensator zum Speichern von elektrischer Ladung mit der Versorgungsspannung, oder einer beispielsweise um 5 oder 10 Prozent erhöhten Versorgungsspannung ausgebildet sein. Die Zwischenkreiskapazität ist vorteilhaft durch die Schutzeinheit vor Beschädigung oder vor Zerstörung geschützt.

In einer bevorzugten Ausführungsform des Elektromotors weist die Schutzeinheit einen bevorzugt über eine Ladungspumpe angesteuerten, insbesondere als Emitterfolger geschalteten, Verpolschutz-Feldeffekt-Transistor auf. Die Schutzeinheit ist bevorzugt ausgebildet, einen Gate-Anschluss des Verpolschutz-Feldeffekt-Transistors in Abhängigkeit einer Polarität der Versorgungsspannung, - insbesondere nach Ablauf einer Verzögerungszeit - nach einem Verbinden mit der Versorgungsspannung, anzusteuern. Bei einem als Emitterfolger geschalteten Feldeffekt-Transistor entspricht der Quellenanschluss dem Emitter eines Bipolar-Transistors. Die Ansteuerung über die Ladungspumpe bewirkt vorteilhaft, dass der Verpolschutz-Feldeffekt-Transistor sicher durchgesteuert werden kann.

In einer bevorzugten Ausführungsform weist die Schutzeinheit einen - bevorzugt über die Ladungspumpe angesteuerten - Überspannungsschutz-Feldeffekttransistor auf. Die Schutzeinheit ist ausgebildet, einen Gate-Anschluss des Überspannungsschutz-Feldeffekttransistors in Abhängigkeit eines Versorgungsspannungswertes der Versorgungsspannung oder eines Zwischenkreisspannungswertes der Zwischenkreisspannung anzusteuern. Durch diese Ausführungsform der Schutzeinheit kann vorteilhaft die Leistungsendstufe oder zusätzlich die Zwischenkreiskapazität von der Versorgungsspannung oder der Zwischenkreisspannung im Falle einer Verpolung und/oder Überspannung der Versorgungsspannung - bevorzugt nichtgalvanisch - getrennt werden.

Aus der Funktion der Schutzeinheit kann ein Verfahren zum Betreiben eines Verpolschutzes eines elektronisch kommutierten Elektromotors, beispielsweise des vorab beschriebenen Elektromotors, abgeleitet werden. Bei dem Verfahren zum Betreiben des Verpolschutzes wird ein Zwischenkreis des Elektromotors, bevorzugt umfassend wenigstens eine Leistungsendstufe des Elektromotors in Abhängigkeit von einer Polarität einer Versorgungsspannung des Elektromotors mit der Versorgungsspannung, insbesondere nach Ablauf einer Verzögerungszeit, verbunden.

In einer vorteilhaften Ausführungsform des Verfahrens wird die Leistungsendstufe des Elektromotors in Abhängigkeit von einem Spannungswert der Versorgungsspannung mit der Versorgungsspannung verbunden und/oder bleibt mit der Versorgungsspannung verbunden. Dadurch kann die Leistungsendstufe vorteilhaft vor Überspannung geschützt werden.

Bevorzugt ist die Leistungsendstufe eingangsseitig über eine Zwischenkreiskapazität gepuffert und die Zwischenkreiskapazität wird zusammen mit der Leistungsendstufe in Abhängigkeit der Polarität der Versorgungsspannung verbunden oder getrennt. Der Zwischenkreis umfasst in dieser Ausführungsform die Zwischenkreiskapazität. Weiter bevorzugt umfasst der Zwischenkreis die Steuereinheit.

Die Erfindung wird nun im Folgenden anhand von Figuren und weiteren Ausführungsbeispielen beschrieben. Weitere vorteilhafte Ausführungsformen ergeben sich aus den vorgenannten Merkmalen, oder zusätzlich aus den in der Figurenbeschreibung genannten Merkmalen, oder weiter zusätzlich aus den in den abhängigen Ansprüchen genannten Merkmalen.
Figur 1 zeigt ein Ausführungsbeispiel für einen elektronisch kommutierten Elektromotor mit einer Schutzeinheit, welche derart ausgebildet und angeordnet ist, in Abhängigkeit von einem verpolten Anlegen einer Versorgungsspannung und/oder in Abhängigkeit einer Überspannung der Versorgungsspannung, eine Leistungsendstufe oder zusätzlich eine Zwischenkreiskapazität des Elektromotors von der Versorgungsspannung, - insbesondere nichtgalvanisch - zu trennen;
Figur 2 zeigt ein Ausführungsbeispiel für eine Schaltungsanordnung für eine Schutzeinheit eines elektronisch kommutierten Elektromotors, insbesondere die in Figur 1 beschriebene Schutzeinheit des in Figur 1 beschriebenen Elektromotors;
Figur 3 zeigt ein Ausführungsbeispiel für ein Verfahren zum Betreiben eines elektronisch kommutierten Elektromotors, beispielsweise des Elektromotors der Figur 1.

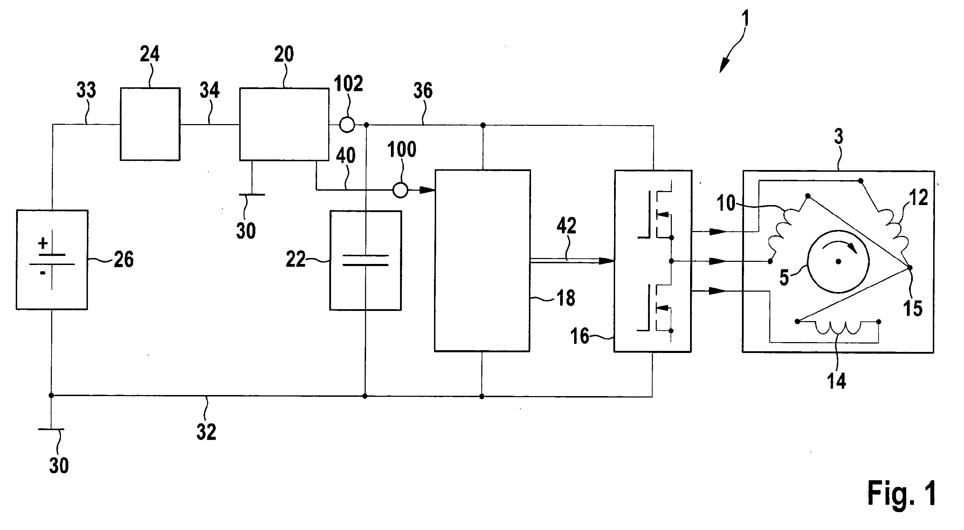

Figur 1 zeigt - schematisch - ein Ausführungsbeispiel für einen Elektromotor 1. Der Elektromotor 1 weist einen Stator 3 und einen Rotor 5 auf. Der Stator 3 weist drei Statorspulen, nämlich eine Statorspule 10, eine Statorspule 12 und eine Statorspule 14 auf, welche zusammen derart angeordnet sind, dass sie - entsprechend angesteuert - ein magnetisches Drehfeld zum Drehbewegen des Rotors 5 erzeugen können.

Die Statorspulen 10, 12 und 14 sind jeweils mit einem zweiten Anschluss mit einem Sternanschluss 15 verbunden, und jeweils mit einem ersten Anschluss mit einer Leistungsendstufe 16. Die Leistungsendstufe 16 ist eingangsseitig über eine Verbindung 42 mit einer Steuereinheit 18 verbunden. Die Steuereinheit 18 ist eingangsseitig über eine Verbindungsleitung 40 mit einer Schutzeinheit 20 des Elektromotors 1 verbunden. Die Schutzeinheit 20 ist über eine Plus-Leitung 34 mit einem Filter 24 verbunden. Das Filter 24 ist über eine Plus-Leitung 33 mit einem Bordnetz 26, und dort mit einem Pluspol des Bordnetz 26 verbunden. Das Filter 24 ist ausgebildet, störende Wechselstromanteile aus einem in der Plus-Leitung 33 fließenden Strom herauszufiltern und über die Plus-Leitung 34 einen gefilterten Strom an die Schutzeinheit 20 zu senden. Das Filter 24 kann dazu beispielsweise durch einen von der Verbindungsleitung 33 zur Verbindungsleitung 34 wirkenden - oder zusätzlich in dazu umgekehrter Richtung wirkenden - Tiefpass gebildet sein. Die Schutzeinheit 20 ist mit einem Masseanschluss 30 verbunden. Der Masseanschluss 30 ist auch mit einem Minuspol des Bordnetzes 26 verbunden. Die Schutzeinheit 20 ist ausgangsseitig über einen Ausgang 102 und über eine Plus-Leitung 36 mit der Steuereinheit 18 und mit der Leistungsendstufe 16 verbunden. Die Schutzeinheit 20 versorgt die Steuereinheit 18 und die Leistungsendstufe 16 mit dem über das Filter 24 von dem Bordnetz 26 empfangenen Strom des Bordnetzes 26. Die Schutzeinheit 20 ist weiter ausgebildet, im Falle einer Überspannung der Bordnetzspannung des Bordnetzes 26 - beispielsweise bei einem Überschreiten eines vorbestimmten Spannungswertes der Bordnetzspannung - ein Überspannungssignal zu erzeugen und dieses über einen Ausgang 100 und über die Verbindungsleitung 40 an die Steuereinheit 18 zu senden. Die Steuereinheit 18 kann in Abhängigkeit des Überspannungssignals Daten und/oder Ergebnisse eines laufenden Verarbeitungsprozesses sichern und anschließend insbesondere gegenüber Überspannung empfindliche Komponenten der Steuereinheit 18 von der Zwischenkreisspannung trennen.

Die Schutzeinheit 20 ist weiter ausgebildet, im Falle der Überspannung der Bordnetzspannung des Bordnetzes 26 einen Ausgang 102, und so die Plus-Leitung 36 von der Plus-Leitung 34 zu trennen, so dass im Falle der getrennten Plus-Leitungen 34 und 36 kein Strom von der Plus-Leitung 34 zur Plus-Leitung 36 fließen kann. Ein Zwischenkreis, umfassend an die Plus-Leitung 36 angeschlossene Komponenten, kann so wirksam geschützt werden.

Die Schutzeinheit 20 ist weiter ausgebildet, im Falle des verpolten Anliegens der Bordnetzspannung des Bordnetzes 26 die Plus-Leitung 34 von der Plus-Leitung 36 zu trennen. Die Schutzeinheit 20 ist weiter ausgebildet, im Falle eines korrekten Anliegens der Bordnetzspannung des Bordnetzes 26 die Plus-Leitung 34 mit der Plus-Leitung 36 zu verbinden.

Der Elektromotor 1 weist auch einen Zwischenkreiskapazität 22 auf. Die Zwischenkreiskapazität 22 ist mit einem ersten Anschluss mit der Plus-Leitung 36 verbunden und mit einem zweiten Anschluss mit dem Masseanschluss 30 über eine Masseleitung 32 verbunden. Die Steuereinheit 18 und die Leistungsendstufe 16 sind jeweils mit dem Masseanschluss 30 über die Masseleitung 32 verbunden.

Die Schutzeinheit 20 kann beispielsweise weiter vorteilhaft dazu ausgebildet sein, - zusätzlich oder unabhängig von einem Erfassen der Bordnetzspannung des Bordnetzes 26 - die Spannung des Zwischenkreises, insbesondere die über dem Zwischenkreiskondensator 22 abfallende Spannung zu erfassen. Das bewirkt vorteilhaft, dass im Falle eines Kurzschlusses des Zwischenkreiskondensators 22 die Steuereinheit 18 und die Leistungsendstufe 16 von dem Bordnetz 26 getrennt werden können. Die Schutzeinheit 20 kann dazu beispielsweise ausgebildet sein, die Zwischenkreisspannung zu erfassen, und in Abhängigkeit eines Unterschreitens eines vorbestimmten Zwischenkreisspannungswertes den Zwischenkreis von dem Bordnetz 26 zu trennen.

Das Trennen bedeutet in diesem Ausführungsbeispiel ein Unterbrechen eines Stromflusses zwischen dem Bordnetz 26 und dem Zwischenkreis. Das Trennen kann auch bedeuten, dass der Zwischenkreis von dem Bordnetz galvanisch getrennt wird.

Die Steuereinheit 18 kann beispielsweise durch einen Mikroprozessor, einen Mikrocontroller oder ein FPGA (FPGA = Field-Programmable-Gate-Array) gebildet sein.

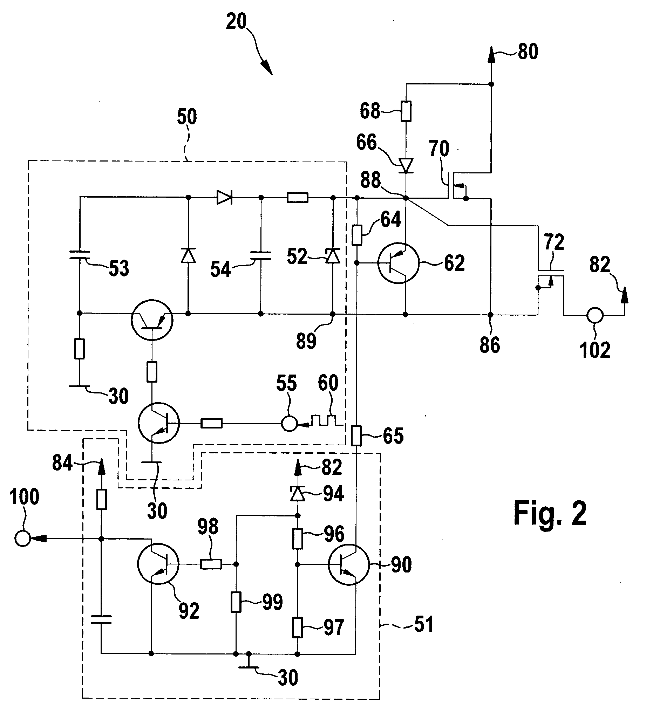

Figur 2 zeigt ein Ausführungsbeispiel für eine Schaltungsanordnung für eine Schutzeinheit, beispielsweise die in Figur 1 bereits dargestellte Schutzeinheit 20. Die in Figur 2 dargestellte Schutzeinheit 20 weist eine Ladungspumpe 50 auf. Die Ladungspumpe 50 weist in diesem Ausführungsbeispiel eine Greinacher-Schaltung auf, welche ausgebildet ist, eine eingangsseitig empfangene Spannung zu verdoppeln und die verdoppelte eingangsseitig empfangene Spannung ausgangsseitig auszugeben. Die Ladungspumpe 50 weist in diesem Ausführungsbeispiel ausgangsseitig eine Zenerdiode 52 auf, welche ausgebildet ist, eine von der Ladungspumpe 50 mittels der Greinacher-Schaltung erzeugten Ausgangsspannung zu begrenzen. Die Ladungspumpe 50 weist einen Eingang 55 zum Empfangen eines Taktsignals 60 auf. Das Taktsignal 60 ist ein periodisch ausgebildetes Taktsignal, welches in diesem Ausführungsbeispiel ein Rechtecksignal ist. Mittels des Taktsignals 60 wird über einen Widerstand ein Steueranschluss eines NPN-Transistors angesteuert. Mittels der Schaltstrecke des NPN-Transistors wird ein Steueranschluss eines PNP-Transistors angesteuert, welcher mit dem Takt des Taktsignals 60 einen Kondensator 53 der Greinacher-Schaltung entweder mit einem Massepotential oder mit einer Spannung des Verbindungsknotens 89 beaufschlagt.

Die Ladungspumpe 50 weist auch einen zweiten Kondensator 54 auf, welcher die mittels der Greinacher-Schaltung verdoppelte Zwischenkreisspannung speichert. Die mittels des Kondensators 54 verdoppelte Spannung des Vebindungsknotens 89, wird mittels der Zenerdiode 52 begrenzt. Die Zenerdiode 52 weist einen Kathodenanschluss auf, welcher mit einem Verbindungsknoten 88 verbunden ist. Die Zenerdiode 52 weist auch einen Anodenanschluss auf, welche mit einem Verbindungsknoten 89 verbunden ist.

Die Schutzeinheit 20 weist auch einen PNP-Transistor auf, welcher mit einem Steueranschluss über einen Widerstand 64 mit dem Verbindungsknoten 88 verbunden ist.

Ein Emitteranschluss des Transistors 62 ist auch mit dem Verbindungsknoten 88 verbunden. Ein Kollektoranschluss des Transistors 62 ist mit dem Verbindungsknoten 89 verbunden. Der Steueranschluss des Transistors 62 ist über einen Widerstand 65 mit einem Kollektoranschluss eines NPN-Transistors verbunden, welcher mit seinem Emitteranschluss mit dem Masseanschluss 30 verbunden ist.

Der Transistor 90 ist Bestandteil einer Überspannungsschutzeinheit 51, welche ausgebildet ist, den Transistor 62 über den Widerstand 65 in Abhängigkeit einer Überspannung des Zwischenkreises durchzuschalten oder zu sperren. Wenn nämlich mittels des Transistors 90 ein Stromfluss über den Widerstand 65 und über den Widerstand 64, - welche zusammen einen Spannungsteiler bilden -, geschaltet wird, so steuert der Transistor 62 durch und schließt somit die von der Ladungspumpe 50 erzeugte Spannung zwischen den Quellenanschlüssen und den Gate-Anschlüssen der Feldeffekttransistoren 70 und 72 kurz.

Der Verbindungsknoten 88 ist über eine Diode 66 und weiter über einen Widerstand 68 mit einem positiven Anschluss 80 einer Versorgungsspannung, beispielsweise der Bordnetzspannung des in Figur 1 bereits dargestellten Bordnetzes 26 verbunden. Eine Kathodenanschluss der Diode 66 weist zum Verbindungsknoten 88. Die Diode 66 verhindert ein Kurzschließen des gegenüber dem Potential der Versorgungsspannung erhöhten Potential auf dem Verbindungsknoten 88 mit dem Potential der Versorgungsspannung an dem Anschluss 80.

Die Schutzeinheit 20 weist einen Feldeffekt-Transistor 70 und einen Feldeffekt-Transistor 72 auf. Der Feldeffekt-Transistor 70 weist einen Steueranschluss auf, wobei der Steueranschluss mit dem Verbindungsknoten 88 verbunden ist. Ein Quellenanschluss des Feldeffekt-Transistors 70 ist mit einem Verbindungsknoten 86 verbundenen, welcher zusammen mit dem Verbindungsknoten 89 gleiches Potential aufweist.

Einen Senkenanschluss des Feldeffekt-Transistor 70 ist mit dem Anschluss 80 der Versorgungsspannung verbunden. Wenn die Versorgungsspannung polungsrichtig angelegt ist, so liegt zwischen dem Verbindungsknoten 88 und dem Verbindungsknoten 86 die Ausgangsspannung der Ladungspumpe 50. Der Feldeffekt-Transistor 70 kann dann durchsteuern und das Plus-Potential des Anschlusses 80 auf den Verbindungsknoten 86 schalten.

Der Feldeffekttransistor 72 ist mit einem Quellenanschluss mit dem Verbindungsknoten 86 verbunden und mit einem Senkenanschluss mit einem Ausgang 102 verbunden. Der Ausgang 102 kann beispielsweise den in Figur 1 dargestellten Zwischenkreis, und dort die Plus-Leitung 36 mit Zwischenkreisspannung versorgen.

Ein Steueranschluss des Feldeffekt-Transistors ist 72 ist mit dem Verbindungsknoten 88 verbunden. Somit werden sowohl der Feldeffekt-Transistor 70 als auch der Feldeffekttransistor 72 mittels des von der Ladungspumpe 50 erzeugten Potentials durchgesteuert. Der Feldeffekttransistor 72 hat dabei eine Schutzfunktion hinsichtlich einer Überspannung, und kann im Falle einer Überspannung den Ausgang 102 von einem an den Ausgang 102 angeschlossenen Zwischenkreis trennen. Wenn nämlich im Falle der Überspannung der Transistor 62 durchsteuert, so wird der Verbindungsknoten 88 mit dem Verbindungsknoten 86 niederohmig verbunden beziehungsweise kurzgeschlossen, so dass auch der Steueranschluss des Feldeffekttransistor 72 mit dem Quellenanschluss des Feldeffekt-Transistors 72 verbunden ist und so nicht mehr durchsteuern kann.

Wenn die Versorgungsspannung falsch gepolt anliegt, so sperrt die Diode 66, so dass der Steueranschluss des Feldeffekt-Transistors 70 den Feldeffekt-Transistor 70 nicht durchsteuern kann. Die Ladungspumpe 50 wird im Falle einer verpolt angelegten Versorgungsspannung keine Ausgangsspannung erzeugen. Wenn die Versorgungsspannung richtig gepolt angelegt ist, so liegt zumindest das Potential des Pluspols der Versorgungsspannung, nämlich des Anschlusses 80, - geschaltet über die Diode 66 - an dem Verbindungsknoten 88 und so auch an den Steueranschlüssen der Feldeffekt-Transistoren 70 und 72 an. Wenn dann - nach einem Einschalt-Zeitintervall, beispielsweise nach wenigstens zehn Millisekunden - die Ladungspumpe 50 arbeitet, und der Kondensator 54 hinreichend geladen ist, so steigt das positive Potential am Verbindungsknoten 88 weiter an. Das bewirkt, dass die Feldeffekt-Transistoren 70 und 72 jeweils voll durchgesteuert werden können.

Der Transistor 90 der Überspannungsschutzeinheit 51 ist mit seinem Steueranschluss mit einem Mittelanschluss eines Spannungsteilers, gebildet aus Widerständen 96 und 97, verbunden. Der Widerstand 97 verbindet den Steueranschluss des Transistors 90 mit dem Masseanschluss 30, der Widerstand 96 verbindet den Steueranschluss des Transistors 90 mit einem Anodenanschluss einer Zenerdiode 94. Ein Kathodenanschluss der Zenerdiode 94 ist mit dem Anschluss 82 verbunden, welcher das Zwischenkreispotential führt.

Der Anodenanschluss der Zenerdiode 94 ist über einen Widerstand 99 mit dem Masseanschluss 30 verbunden. Der Anodenanschluss der Zenerdiode 94 ist auch über einen Vorwiderstand 98 mit einem Steueranschluss eines NPN-Transistors 92 verbunden. Der NPN-Transistor 92 ist mit seinem Emitteranschluss mit dem Masseanschluss 30 und mit seinem Kollektoranschluss mit einem Ausgang 100 verbunden. Der Ausgang 100 kann beispielsweise mit der in Figur 1 dargestellten Verbindungsleitung 40 verbunden sein. Wenn die Zwischenkreisspannung am Anschluss 82 die Zenerspannung der Zenerdiode 94 übersteigt, so kann der Transistor 90 durchsteuern und über den Transistor 62 den Feldeffekt-Transistor 72 sperren. Mit dem nach dem Zenerdurchbruch durch die Zenerdiode 94 fließenden Strom fällt auch eine Spannung über den Widerstand 99 ab, mittels welcher der Transistor 92 über den Vorwiderstand 98 durchgesteuert werden kann.

Der durchgesteuerte Transistor 92 zieht den Ausgang 100 auf das Massepotential des Masseanschlusses 30. Dadurch wird ein die Überspannung repräsentierendes Überspannungssignal am Ausgang 100 erzeugt, welches beispielsweise in Figur 1 über die Verbindungsleitung 40 an die Steuereinheit 18 gesendet werden kann. Ein Anschluss 84 führt ein Potential einer Betriebsspannung der Steuereinheit 18 in Figur 1, beispielsweise einem Mikrocontroller. Der Anschluss 18 ist über einen Widerstand mit Ausgang 100 verbunden. Der Ausgang 100 ist über einen Kondensator mit dem Masseanschluss 30 verbunden. Dadurch kann der Ausgang 100 im Falle eines gesperrten Transistors 92 das Potential des Anschlusses 84 führen.

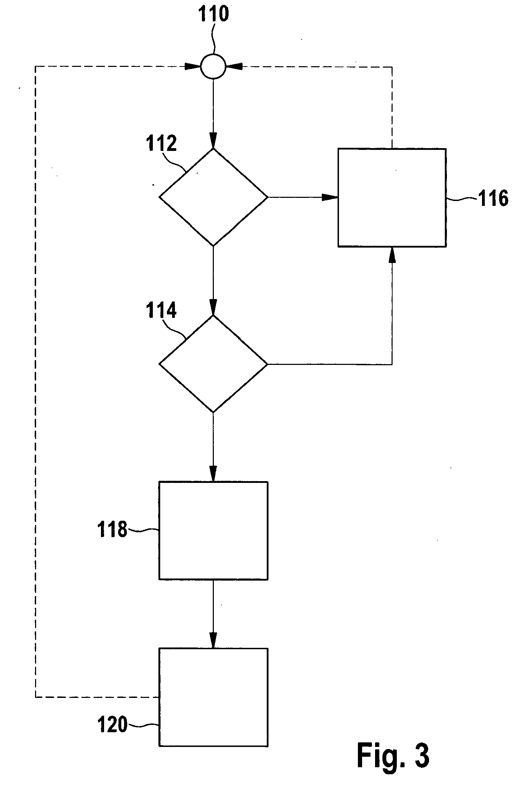

Figur 3 zeigt - schematisch - ein Ausführungsbeispiel für ein Verfahren zum Betreiben eines elektronisch kommutierten Elektromotors, beispielsweise des in Figur 1 gezeigten elektronisch kommutierten Elektromotors 1. Bei dem Verfahren wird in einem Schritt 110 eine Versorgungsspannung an den Elektromotor angelegt. In einem Schritt 112 wird eine Polarität der Versorgungsspannung des Elektromotors erfasst und in Abhängigkeit von der Polarität der Versorgungsspannung - im Falle eine Falschpolung - in einem weiteren Schritt 116 der Elektromotor von der Versorgungsspannung getrennt.

Im Falle eines Anliegens einer korrekt gepolten Versorgungsspannung wird in einem weiteren Schritt 114 ein Spannungswert einer Zwischenkreisspannung des Elektromotors erfasst. Im Falle eines Überschreitens eines vorbestimmten Zwischenkreisspannungswertes - also im Falle einer Überspannung - wird in dem Schritt 116 der Elektromotor nicht mit der Versorgungsspannung verbunden - oder ein bereits verbundener Elektromotor von der Versorgungsspannung getrennt. Im Falle eines Unterschreitens oder Entsprechens der Zwischenkreisspannung mit dem vorbestimmten Zwischenkreisspannungswert wird in einem Schritt 118 der Elektromotor, insbesondere eine Leistungsendstufe, eine Zwischenkreiskapazität und eine Steuereinheit des Elektromotors mit der Versorgungsspannung, insbesondere nach Ablauf einer Verzögerungszeit, verbunden.

In einem Verfahrensschritt 120 wird ein Stator des Elektromotors zum Erzeugen eines magnetischen Drehfeldes bestromt und so ein Rotor des Elektromotors in ein Drehbewegen versetzt. Das Verfahren kann, wie durch die gestrichelte Verbindung zwischen dem Schritt 120 und 110 und zwischen dem Schritt 116 und 110 angedeutet, zeitkontinuierlich oder einem Steuertakt folgend, bei dem Schritt 110 erneut beginnen.

## Patentansprüche

1. Elektronisch kommutierter Elektromotor (1) mit einem Stator (3) und mit einem insbesondere permanentmagnetisch ausgebildetem Rotor (5), und mit einer ausgangsseitig mit dem Stator (3) verbundenen Leistungsendstufe (16) und einer mit der Leistungsendstufe (16) verbundenen Steuereinheit (18), wobei die Steuereinheit (18) ausgebildet ist, die Leistungsendstufe (16) derart anzusteuern, dass der Stator (3) ein magnetisches Drehfeld zum Drehbewegen des Rotors erzeugen kann, und wobei der Elektromotor (1) eine Schutzeinheit (20) aufweist, welche ausgebildet ist, in Abhängigkeit einer Falschpolung einer Versorgungsspannung (26, 33, 34, 80) des Elektromotors (1) die Leistungsendstufe (16) oder zusätzlich die Steuereinheit (18) von der Versorgungsspannung (26, 33, 34, 80) zu trennen, wobei die Schutzeinheit (20) eine Ladungspumpe (50) zur Ansteuerung eines Verpolschutz-Feldeffekt-Transistors (70) und eines Überspannungsschutz-Feldeffekt-Transistors (72) auweist, wobei eine Überspannungsschutzeinheit (51) der Schutzeinheit (20) im Falle einer Überspannung der Versorgungsspannung (80) die von der Ladungspumpe (50) erzeugte Spannung zwischen den jeweiligen Quell- und Steueranschlüssen des Verpolschutz- (70) und des Überspannungsschutz-Feldeffekt-Transistors (72) kurzschließt, **dadurch gekennzeichnet, dass** das Kurzschließen mittels eines weiteren Transistors (62) derart erfolgt, dass in Abhängigkeit eines über einen Widerstand (65) fließenden Stroms ein NPN-Transistor (90) der Überspannungsschutzeinheit (51) den weiteren Transistor (62) durchschaltet.

2. Elektronisch kommutierter Elektromotor (1) nach Anspruch 1, **dadurch gekennzeichnet, dass** die Ladungspumpe (50) eine aus zumindest einem NPN-Transistor, einem PNP-Transistor und einem Kondensator (53) betehende Greinacher-Schaltung aufweist zur ausgangsseitigen (88, 89) Verdoppelung einer eingangsseitig (55) empfangenen Spannung in Form eines periodischen Taktsignals (60).

3. Elektronisch kommutierter Elektromotor (1) nach Anspruch 1 oder 2, **dadurch gekennzeichnet, dass** der Elektromotor (1) eine wenigstens zur Leistungsendstufe (16) parallel geschaltete Zwischenkreiskapazität (22) aufweist und die Schutzeinheit (20) ausgebildet und angeordnet ist, eine an der Zwischenkreiskapazität (22) anliegende Zwischenkreisspannung zu erfassen und die Zwischenkreiskapazität (22) oder zusätzlich die Leistungsendstufe (16) in Abhängigkeit von der Zwischenkreisspannung zu trennen.

4. Elektronisch kommutierter Elektromotor (1) nach Anspruch 3, **dadurch gekennzeichnet, dass** die Schutzeinheit (20) ausgebildet und angeordnet ist, die Zwischenkreiskapazität (22) oder zusätzlich die Leistungsendstufe (16) in Abhängigkeit von einem Absinken der Zwischenkreisspannung zu trennen.

5. Elektronisch kommutierter Elektromotor (1) nach einem der vorhergehenden Ansprüche 3 und 4, **dadurch gekennzeichnet, dass** die Zwischenkreiskapazität (22) ein keramischer Kondensator ist.

6. Elektronisch kommutierter Elektromotor (1) nach einem der vorhergehenden Ansprüche, **dadurch gekennzeichnet, dass** die Schutzeinheit (20) ausgebildet ist, den Gate-Anschluss des Verpolschutz-Feldeffekt-Transistors (70) in Abhängigkeit einer Polarität der Versorgungsspannung (80) nach Ablauf einer Verzögerungszeit nach einem Verbinden des Elektromotors (1) mit der Versorgungsspannung anzusteuern.

7. Elektronisch kommutierter Elektromotor (1) nach einem der vorhergehenden Ansprüche, **dadurch gekennzeichnet, dass** die Schutzeinheit (20) ausgebildet ist, einen Gate-Anschluss des Überspannungsschutz-Feldeffekt-Transistors (72) in Abhängigkeit von einem Zwischenkreisspannungswert der Zwischenkreisspannung (82, 36) anzusteuern.

## Claims

1. Electronically commutated electric motor (1) comprising a stator (3) and a rotor (5), in particular in the form of a permanent-magnet rotor, and a power output stage (16), which is connected on the output side to the stator (3), and a control unit (18), which is connected to the power output stage (16), wherein the control unit (18) is designed to drive the power output stage (16) in such a way that the stator (3) can generate a rotating magnetic field for the rotary movement of the rotor, and wherein the electric motor (1) has a protection unit (20), which is designed to isolate the power output stage (16) or additionally the control unit (18) from the supply voltage (26, 33, 34, 80) depending on incorrect polarization of a supply voltage (26, 33, 34, 80) of the electric motor (1), wherein the protection unit (20) has a charge pump (50) for driving a polarity reversal protection field-effect transistor (70) and an overvoltage protection field-effect transistor (72), wherein an overvoltage protection unit (51) of the protection unit (20) short-circuits the voltage generated by the charge pump (50) between the respective source and control terminals of the polarity reversal protection field-effect transistor (70) and the overvoltage protection field-effect transistor (72) in the event of an overvoltage of the supply voltage (80), **characterized in that** the short-circuiting is performed by means of a further transistor (62) in such a way that an NPN transistor (90) of the overvoltage protection unit (51) connects the further transistor (62) depending on a current flowing via a resistor (65).

2. Electronically commutated electric motor (1) according to Claim 1, **characterized in that** the charge pump (50) has a Greinacher circuit consisting of at least one NPN transistor, one PNP transistor and one capacitor (53) for the output-side (88, 89) doubling of a voltage received on the input side (55) in the form of a periodic clock signal (60).

3. Electronically commutated electric motor (1) according to Claim 1 or 2, **characterized in that** the electric motor (1) has an intermediate circuit capacitance (22) which is connected in parallel with at least the power output stage (16) and the protection unit (20) is designed and arranged to detect an intermediate circuit voltage present at the intermediate circuit capacitance (22) and to isolate the intermediate circuit capacitance (22) or additionally the power output stage (16) depending on the intermediate circuit voltage.

4. Electronically commutated electric motor (1) according to Claim 3, **characterized in that** the protection unit (20) is designed and arranged to isolate the intermediate circuit capacitance (22) or additionally the power output stage (16) depending on a reduction in the intermediate circuit voltage.

5. Electronically commutated electric motor (1) according to one of the preceding Claims 3 and 4, **characterized in that** the intermediate circuit capacitance (22) is a ceramic capacitor.

6. Electronically commutated electric motor (1) according to one of the preceding claims, **characterized in that** the protection unit (20) is designed to drive the gate terminal of the polarity reversal protection field-effect transistor (70) depending on a polarity of the supply voltage (80) once a delay time has elapsed after connection of the electric motor (1) to the supply voltage.

7. Electronically commutated electric motor (1) according to one of the preceding claims, **characterized in that** the protection unit (20) is designed to drive a gate terminal of the overvoltage protection field-effect transistor (72) depending on an intermediate circuit voltage value of the intermediate circuit voltage (82, 36).

## Revendications

1. Moteur électrique (1) à commutation électronique doté d'un stator (3) et d'un rotor (5) réalisé notamment avec des aimants permanents et d'un étage final de puissance (16) relié du côté de sortie au stator (3) et d'une unité de commande (18) reliée à l'étage final de puissance (16), l'unité de commande (18) étant réalisée pour commander l'étage final de puissance (16) de telle sorte que le stator (3) peut produire un champ magnétique tournant permettant de faire tourner le rotor et le moteur électrique (1) comportant une unité de protection (20) réalisée pour déconnecter, en cas de polarisation défaillante d'une tension d'alimentation (26, 33, 34, 80) du moteur électrique (1), l'étage final de puissance (16) ou, en sus, l'unité de commande (18), par rapport à la tension d'alimentation (26, 33, 34, 80), l'unité de protection (20) comportant une pompe de charge (50) permettant d'exciter un transistor à effet de champ de protection contre l'inversion de polarité (70) et un transistor à effet de champ de protection contre les surtensions (72), une unité de protection contre les surtensions (51) de l'unité de protection (20) court-circuitant, en cas de surtension de la tension d'alimentation (80), la tension produite par la pompe de charge (50) entre les bornes de source et de commande respectives du transistor à effet de champ de protection pour l'inversion de polarité (70) et du transistor à effet de champ de protection contre les surtensions (72), **caractérisé en ce que** le court-circuitage se produit à l'aide d'un transistor (62) supplémentaire de telle sorte qu'en cas de courant circulant au travers d'une résistance (65), un transistor (90) NPN de l'unité de protection contre les surtensions (51) connecte le transistor (62) supplémentaire.

2. Moteur électrique (1) à commutation électronique selon la revendication 1, **caractérisé en ce que** la pompe de charge (50) comporte un circuit de Greinacher composé d'au moins un transistor NPN, d'un transistor PNP et d'un condensateur (53) en vue de doubler, du côté de sortie (88, 89), une tension reçue du côté d'entrée (55) sous la forme d'un signal d'horloge (60) périodique.

3. Moteur électrique (1) à commutation électronique selon la revendication 1 ou 2, **caractérisé en ce que** le moteur électrique (1) comporte une capacité indirecte (22) connectée au moins parallèlement à l'étage final de puissance (16) et que l'unité de protection (20) est réalisée et disposée de façon à détecter une tension indirecte régnant au niveau d'une capacité indirecte (22) et à déconnecter la capacité indirecte (22) ou en sus l'étage final de puissance (16) en fonction de la tension indirecte.

4. Moteur électrique (1) à commutation électronique selon la revendication 3, **caractérisé en ce que** l'unité de protection (20) est réalisée et disposée de façon à déconnecter la capacité indirecte (22) ou en sus l'étage final de puissance (16) en fonction de la baisse de la tension indirecte.

5. Moteur électrique (1) à commutation électronique selon l'une quelconque des revendications 3 et 4, **caractérisé en ce que** la capacité indirecte (22) est un condensateur céramique.

6. Moteur électrique (1) à commutation électronique selon l'une quelconque des revendications précédentes, **caractérisé en ce que** l'unité de protection (20) est réalisée pour commander la borne de grille du transistor à effet de champ de protection contre l'inversion de polarité (70) en fonction d'une polarité de la tension d'alimentation (80) après écoulement d'un temps de temporisation commençant après raccordement du moteur électrique (1) à la tension d'alimentation.

7. Moteur électrique (1) à commutation électronique selon l'une quelconque des revendications précédentes, **caractérisé en ce que** l'unité de protection (20) est réalisée pour commander une borne de grille du transistor à effet de champ de protection contre les surtensions (72) en fonction d'une valeur de tension indirecte de la tension indirecte (82, 36).
